# EUROPÄISCHE PATENTSCHRIFT

(11) **EP 2 037 238 B1**
(45) Veröffentlichungstag und Bekanntmachung des Hinweises auf die Patenterteilung: **04.11.2009**
(21) Anmeldenummer: 07017968.4
(22) Anmeldetag: 13.09.2007
(51) Int. Cl.: G01J 1/42, G01J 1/04

(54) **Messgerät zur Vermessung eines Laserstrahls**
Measuring device for measuring a laser beam
Appareil de mesure d'un rayon laser

(43) Veröffentlichungstag der Anmeldung: 18.03.2009
(73) Patentinhaber: WaveLight AG, 91058 Erlangen (DE)
(72) Erfinder: Zerl, Bernd, 91074 Herzogenaurach (DE); Kittelmann, Olaf, Dr., 14163 Berlin (DE)
(74) Vertreter: Katérle, Axel

(56) Entgegenhaltungen:
- CH-A- 400 758
- US-A- 5 194 993
- US-A1- 2004 066 504
- US-A1- 2006 043 258
- US-A1- 2006 056 060
- US-A1- 2006 254 115
- US-A1- 2007 019 100
- SCHÄFTER&KIRCHHOFF KATALOG: "Opto-sensorik und Messtechik" StartDateMarker 1992, EndDateMarker
- LINOS KATALOG: StartDateMarker 1993, EndDateMarker

## Beschreibung

Die Erfindung betrifft ein Messgerät zur Vermessung eines Laserstrahls. Der zu vermessende Laserstrahl dient insbesondere zum Einsatz in der ophtalmologischen Laserchirurgie, etwa im Rahmen einer photorefraktiven Behandlung der Kornea oder der Linse. Dies ist freilich nur ein Beispiel; grundsätzlich ist die Erfindung keinerlei Einschränkungen hinsichtlich des Einsatzzwecks des zu vermessenden Laserstrahls unterworfen. Präzises Wissen über bestimmte Strahlparameter ist generell bei vielen Laseranwendungen erforderlich, wobei nur als zwei von zahlreichen anderen Beispielen neben der Laserchirurgie des Auges die Photolithographie in der Halbleitertechnik sowie die Laserabtastung oder Laserbeschreibung von optischen Datenträgern genannt werden können.

Interessierende Strahlparameter eines Laserstrahl sind häufig der Strahldurchmesser, insbesondere im Bereich der Strahltaille, sowie die Strahldivergenz, aber auch andere Parameter wie die Beugungsmaßzahl (üblicherweise abgekürzt durch M²) oder das Intensitätsprofil quer zur Strahlrichtung.

Zur Vermessung eines Laserstrahls sind sogenannte Knife-Edge- oder Spaltmethoden bekannt, bei denen eine Klinge oder ein hinreichend schmaler Spalt quer durch den Strahl hindurchbewegt wird und abhängig von der Klingen- bzw. Spaltposition die transmittierte Leistung mittels eines Detektors gemessen wird. Durch Differentiation der so gewonnenen Transmissionskurve kann anschließend das Intensitätsprofil ermittelt werden, anhand dessen wiederum der Strahldurchmesser bestimmt werden kann.

Als Alternative zu den obigen jeweils auf einer "Abtastung" des Strahls beruhenden Transmissionsmessmethoden ist es beispielsweise aus US 4,917,489 bekannt, den Laserstrahl mittels einer einzelnen Vergrößerungslinse zu vergrößern und den so vergrößerten Laserstrahl nach geeigneter Intensitätsabschwächung auf einen Bildaufnehmer (Bildsensor) zu lenken. Aus dem so erzeugten Bild des Laserstrahls kann sodann unter Berücksichtigung des Vergrößerungsfaktors der Linse der Strahldurchmesser im objektseitigen Linsenbrennpunkt berechnet werden.

US 2004/066504 A1 offenbart eine Messanordnung zur Vermessung des Strahlmusters der von einer Laserdiode ausgesendeten Laserstrahlung. Die Laserdiode ist auf einem Trägertisch angeordnet, welcher in drei zueinander senkrechten linearen Raumrichtungen verstellbar ist. Die Messanordnung umfasst zwei Kameras, deren eine zur Aufnahme eines Bilds des fokussierten Laserstrahls der Laserdiode dient und deren andere zur Aufnahme eines Bilds des Fernfeldmusters des Laserstrahls dient. Die erste Kamera befindet sich im bildseitigem Brennpunkt eines von einer Objektivlinse und einer Relaylinse gebildeten afokalen Teleskoppaars. Zur Durchführung der Messung wird die Laserdiode durch Steuerung des sie tragenden Tisches so positioniert, dass der Punkt des Lichtsaustritts aus der Laserdiode im objektsseitigen Brennpunkt des Linsenpaars liegt.

US 2006/043258 A1 zeigt eine Knife-Edge-Messanordnung zur Vermessung des Lichts einer Laserstrahlquelle. Neben einer quer zur Strahlrichtung in den Laserstrahl hineinfahrbaren und aus diesem herausfahrbaren Klinge besitzt die Messanordnung einen CCD-Bildsensor sowie eine zwischen der Klinge und dem Bildsensor liegende Vergrößerungsoptik mit einer einzelnen Objektivlinse. Der Bildsensor und die Vergrößerungsoptik sind auf einem Justiertisch angeordnet, welcher in allen drei linearen Raumrichtungen verstellbar ist.

Die Unterbringung von Linsen in einem zylindrischen Aufnahmeteil ist am Beispiel eines Objektivs einer Fotokamera in CH 400 758 A beschrieben.

Die Erfindung stellt demgegenüber die Verwendung eines Messgeräts mit den Merkmalen des Anspruchs 1 bereit. Das Messgerät umfasst eine Vergrößerungslinsenanordnung mit mindestens zwei im Strades Laserstrahls hintereinander angeordneten Linsen, wobei paarweise aufeinanderfolgende Linsen der Vergrößerungslinsenanordnung jeweils zusammenfallende Brennpunkte haben, einen hinter der Vergrößerungslinsenanordnung in deren Brennpunkt angeordneten elektronischen Bildsensor zur Aufnahme eines Bilds des vergrößerten Laserstrahls sowie Längsverstellmittel, welche eine gemeinsame Verstellung der Linsen der Vergrößerungslinsenanordnung und des Bildsensors entlang des Strahlengangs relativ zu einem Referenzpunkt des Messgeräts gestatten.

Aus der Fachliteratur zur Optik Gaußscher Strahlen (vgl. z.B. Kühlke, Dietrich: "Optik, Grundlagen und Anwendungen", Harri Deutsch Verlag, 1. Auflage, 1998) ergibt sich eine Abhängigkeit des Vergrößerungsfaktors einer einzelnen Vergrößerungslinse vom Strahldurchmesser des zu vermessenden Laserstrahls. Betrachtet man als Vergrößerungsfaktor den Quotient aus Taillendurchmesser des vergrößerten Strahls und Taillendurchmesser des unvergrößerten Strahls, so ergibt sich insbesondere, dass der Vergrößerungsfaktor einer einzelnen Vergrößerungslinse für kleinere Taillendurchmesser markant größer sein kann als bei größeren Taillendurchmessern. Die Annahme eines nominalen, konstanten Vergrößerungsmaßstabs kann also bei Verwendung einer einzelnen Vergrößerungslinse zu erheblichen Messfehlern führen, wenn Foki unterschiedlichen Taillendurchmessers vermessen werden.

Die Erfinder haben erkannt, dass mit einem Mehrlinsensystem die Abhängigkeit des Vergrößerungsmaßstabs vom Strahldurchmesser beseitigt werden kann, nämlich dann, wenn jedes Paar aufeinanderfolgender Linsen jeweils zusammenfallende Brennpunkte hat. In diesem Fall kann von einem stets konstanten Vergrößerungsmaßstab ausgegangen werden, gleichgültig wie groß der Taillendurchmesser des zu vermessenden Strahls ist. Dies erlaubt eine erheblich präzisere Bestimmung des tatsächlichen Taillendurchmessers des zu vermessenden Laserstrahls.

Die Längsverstellmittel des erfindungsgemäßen Messgeräts gestatten eine definierte Verstellung der Gesamtheit der Linsen und des Bildsensors entlang des Strahlengangs relativ zu einem messgeräteeigenen Referenzpunkt. Messgeräteeigen heißt, der Referenzpunkt befindet sich an oder in dem Messgerät und ist somit relativ zu dem Messgerät als Ganzem stationär. Die Verstellbarkeit des Systems aus Linsen und Bildsensor längs des Strahlengangs ermöglicht eine präzise Lokalisierung der Strahltaille des zu vermessenden Laserstrahls und daraus folgend eine präzise Einstellung des Messgeräts, so dass der Fokus des Laserstrahls mit dem Brennpunkt der ersten Linse der Vergrößerungslinsenanordnung zusammenfällt.

Diese Situation ist dann gegeben, wenn der von dem Bildsensor erfasste Strahlquerschnitt am kleinsten ist. Denn bei der erfindungsgemäßen gegenseitigen Anordnung der Linsen und des Bildsensors wird die Strahltaille dann auf die Sensorfläche des Bildsensors abgebildet, wenn sie sich im Brennpunkt der ersten Linse befindet. Durch Längsverstellung des Systems aus Linsen und Bildsensor gegenüber dem Strahlfokus kann diese Position leicht aufgefunden werden.

Die Längsverstellbarkeit der Linsen und des Bildsensors ist alternativ oder zusätzlich nützlich, um den Strahldurchmesser an verschiedenen Orten entlang des Laserstrahls bestimmen zu können, mit anderen Worten um ein Durchmesserprofil des Laserstrahls zu ermitteln. Ein solches Durchmesserprofil erlaubt Aussagen beispielsweise über die Divergenz des Strahls und über die Beugungsmaßzahl. Es versteht sich, dass für die Bestimmung dieser und anderer Strahlparameter eine geeignet programmierte elektronische Auswerteeinheit vorgesehen ist, welche die von dem Bildsensor gelieferten, ggf. in einem Speicher zwischengespeicherten elektrischen Bildsignale auswertet und interpretiert.

Der durch die Längsverstellmittel gebotene Verstellbarkeitsbereich für das System aus Linsen und Bildsensor erstreckt sich vorzugsweise über mindestens die dreifache Rayleigh-Länge des Laserstrahls.

Gewünschtenfalls können die Längsverstellmittel zusätzlich eine Längsverstellung der Linsen relativ zueinander oder/und relativ zu dem Bildsensor gestatten, etwa für Kalibrierungszwecke oder um Bauteil- und Monatagetoleranzen ausgleichen zu können.

Gemäß einer Ausführungsform, die eine besonders kurze Bauform des Messgeräts gestattet, weist die Vergrößerungslinsenanordnung insgesamt zwei Linsen auf. Für einen ausreichenden Vergrößerungsmaßstab ist dabei eine relativ kleine Brennweite der ersten Linse erforderlich, weshalb die erste Linse insgesamt relativ klein auszuführen ist. Größere Linsen, die leichter handhabbar und einbaubar sind, sind möglich, wenn die Vergrößerungslinsenanordnung insgesamt vier Linsen aufweist. Die Vergrößerungsleistung kann dabei auf zwei Vergrößerungsstufen - bestehend aus je einem Linsenpaar - aufgeteilt werden, weshalb bei insgesamt gleicher Gesamtvergrößerung jedes Linsenpaar eine geringere Vergrößerung haben kann als das einzige Linsenpaar bei der Ausführungsform mit insgesamt zwei Linsen.

Es können alle Linsen der Vergrößerungslinsenanordnung jeweils als Sammellinse ausgebildet sein. Alternativ ist es möglich, dass die Vergrößerungslinsenanordnung wenigstens eine Zerstreuungslinse aufweist, jedoch zumindest die letzte Linse als Sammellinse ausgebildet ist. Wegen ihrer negativen Brennweite gestattet die Verwendung einer Zerstreuungslinse eine Bauraumverkürzung verglichen mit einer Sammellinse. Dies kann besonders bei Ausführungsformen mit mehr als zwei Linsen genutzt werden, wenn die Brennweite der ersten Linse größer gewählt werden kann und deshalb der Bauraumgewinn bei Verwendung einer Zerstreuungslinse stärker ins Gewicht fällt als bei Lösungen mit insgesamt zwei Linsen, wo die erste Linse nur eine vergleichsweise kurze Brennweite besitzt. In jedem Fall ist die letzte Linse als Sammellinse auszuführen, weil der Bildsensor ein reelles Bild des Laserstrahls benötigt.

Um die Wellenfrontdeformation durch die Vergrößerungslinsenanordnung gering zu halten, hat es sich als günstig erwiesen, mindestens eine Linse der Vergrößerungslinsenanordnung mit einer planen Linsenseite auszuführen und sie mit ihrer gekrümmten Linsenseite dem Strahlabschnitt geringerer Divergenz zugewandt anzuordnen. Vorzugsweise enthält die Vergrößerungslinsenanordnung deshalb allein plan-konvexe oder plan-konkave Linsen, jedoch keine beidseitig gekrümmten Linsen, wenngleich dies natürlich kein Muss ist.

Bauteil- und Monatagetoleranzen können die Ursache dafür sein, dass wenigstens ein Teil der optischen Komponenten des Messgeräts in Richtung quer zum Strahlengang nicht exakt gegenüber dem Laserstrahl ausgerichtet ist. Deshalb umfasst das Messgerät bevorzugt Querverstellmittel, welche eine Verstellung zumindest der ersten Linse der Vergrößerungslinsenanordnung quer, insbesondere senkrecht zum Strahlengang relativ zu dem oben angesprochenen Referenzpunkt des Messgeräts gestatten. Es hat sich gezeigt, dass eine Fehlausrichtung der ersten Linse der Vergrößerungslinsenanordnung quer zum Strahlengang eine besonders starke Auswirkung auf die Lage der Bildposition auf dem Bildsensor, die Wellenfrontdeformationen und die Abbildungsverzerrungen haben kann, stärker jedenfalls als entsprechende Fehlausrichtungen der anderen Linsen. Deshalb sollte zumindest die erste Linse querjustierbar sein. Sie kann gemäß einer Variante allein für sich querjustierbar sein, also unabhängig von den anderen Linsen und unabhängig von dem Bildsensor. Gemäß einer anderen Variante kann die erste Linse zusammen mit wenigstens einer weiteren Linse der Vergrößerungslinsenanordnung, insbesondere zusammen mit allen Linsen der Vergrößerungslinsenanordnung, und vorzugsweise auch zusammen mit dem Bildsensor als Einheit querjustierbar sein.

Die Querverstellmittel gestatten zweckmäßigerweise eine voneinander unabhängige Verstellung zumindest der ersten Linse der Vergrößerungslinsenanordnung in zwei zueinander senkrechten Querrichtungen.

Die Konstruktion des Messgeräts ist derart, dass zumindest ein Teil der Linsen, insbesondere alle Linsen der Vergrößerungslinsenanordnung im Strahlengang hintereinander in einen Linsentubus eingebaut sind, welcher mittels der Längsverstellmittel in Richtung seiner Tubusachse relativ zu dem Referenzpunkt verstellbar ist. Dabei ist der Linsentubus axial verlagerbar, jedoch verdrehgesichert in einer Führungsaufnahmeöffnung eines insbesondere tubusförmig ausgestalteten Führungskörpers geführt, wobei die Längsverstellmittel zwischen dem Linsentubus und dem Führungskörper wirksam sind.

Der Linsentubus kann axial einenends aus dem Führungskörper herausragen und im Bereich seines herausragenden Endes zur mechanischen Kopplung mit einer den Bildsensor enthaltenden Kamera ausgebildet sein.

Zum Spielausgleich zwischen dem Linsentubus und dem Führungskörper empfiehlt es sich, wenn zwischen dem Linsentubus und dem Führungskörper elastische Vorspannmittel wirksam sind, welche den Linsentubus axial gegenüber dem Führungskörper vorspannen.

Der Führungskörper trägt einen den Strahlengang umschließenden Adapter zur Ankopplung des Messgeräts an ein den Laserstrahl bereitstellendes Lasersystem. Dabei ist der Adapter vorzugsweise ein von dem Führungskörper gesondertes Bauteil, welches auswechselbar mit dem Führungskörper verbunden ist. Dies erlaubt eine modulare Bauweise des Messgeräts, für das dann eine Mehrzahl wahlweise benutzbarer, unterschiedlicher Adapter zur Ankopplung an unterschiedliche Lasersysteme bereitgestellt werden können.

Die besprochenen Querverstellmittel können zwischen dem Adapter und dem Führungskörper wirksam sein.

Zweckmäßigerweise bildet der Adapter eine bezogen auf eine Strahlachse des Laserstrahls axial gerichtete Anschlagfläche für das Lasersystem. Diese Anschlagfläche kann dann als Referenzpunkt für die Längs- und gegebenenfalls Querjustage der optischen Komponenten des Messgeräts dienen.

Die Erfindung wird nachfolgend anhand der beigefügten Zeichnungen weiter erläutert. Es stellen dar:
Figur 1 eine schematische Darstellung der relativen Anordnung eines Linsenpaars und eines Bildsensors zur Aufnahme eines vergrößerten Bilds eines Laserstrahls,
Figur 2 eine schematische Darstellung der relativen Anordnung zweier Linsenpaare und eines Bildsensors zur Aufnahme eines vergrößerten Bilds eines Laserstrahls,
Figur 3 einen Längsmittelschnitt durch ein Ausführungsbeispiel eines erfindungsgemäßen Messgeräts,
Figur 4 einen vergrößerten Ausschnitt des Messgeräts der Figur 3 und
Figur 5 vergrößert einen weiteren Ausschnitt des Messgeräts der Figur 3.

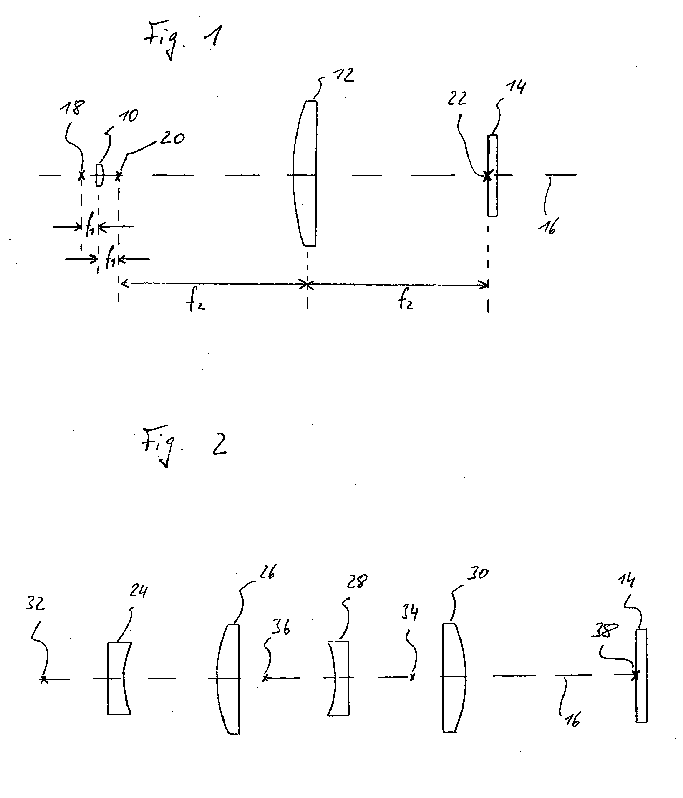

In den Figuren 1 und 2 sind zwei verschiedene Beispielkonfigurationen einer Vergrößerungslinsenanordnung zur Verwendung in einem erfindungsgemäßen Messgerät gezeigt. Bei der Variante der Figur 1 umfasst die Vergrößerungslinsenanordnung insgesamt zwei optisch dünne Linsen 10, 12, die beide jeweils als plan-konvexe Sammellinse ausgebildet sind. Der zu vermessende Laserstrahl trifft zunächst auf die Linse 10 und anschließend auf die Linse 12, bevor sein vergrößertes Bild von einem elektronischen Bildsensor 14 aufgefangen wird. Bei dem Bildsensor kann es sich beispielsweise um einen CCD- oder einen CMOS-Bildsensor handeln. Die optische Achse der Vergrößerungslinsenanordnung ist mit 16 angedeutet. Zur Vermeidung optischer Abbildungsfehler ist es erstrebenswert, wenn die Strahlachse des Laserstrahls mit der optischen Achse 16 zusammenfällt. Da eine Dejustage der optischen Komponenten des Messgeräts quer zur Strahlrichtung des Laserstrahls aufgrund von Bauteil- oder Montagetoleranzen oftmals nicht vollständig vermeidbar ist, sind bei bevorzugten Ausgestaltungen des erfindungsgemäßen Messgeräts geeignete Querverstellmittel (Querjustagemittel) vorgesehen, mittels welcher die Linsen der Vergrößerungslinsenanordnung und gegebenenfalls auch der Bildsensor quer zur Strahlrichtung so justierbar sind, dass die optische Achse 16 im wesentlichen exakt mit der Strahlachse zusammenfällt.

Die Linse 10 in Figur 1 besitzt eine Brennweite f₁; ihre beiden Brennpunkte (objektseitig und bildseitig) sind mit 18 bzw. 20 bezeichnet.

Die Linse 12 besitzt eine Brennweite f₂. Sie ist so angeordnet, dass ihr objektseitiger Brennpunkt mit dem bildseitigen Brennpunkt 20 der ersten Linse 10 zusammenfällt. Bildseitig besitzt die Linse 12 einen Brennpunkt 22. Mit diesem Brennpunkt 22 fällt die Sensorebene des Bildsensors 14 zusammen.

Wenn bei dieser gegenseitigen Anordnung der Linsen 10, 12 und des Bildsensors 14 die Strahltaille des zu vermessenden Laserstrahls im Brennpunkt 18 liegt, wird sie mit einem vom Taillendurchmesser unabhängigen Vergrößerungsmaßstab auf den Bildsensor 14 abgebildet. Der Bildsensor 14 ist mit nicht näher dargestellten elektronischen Auswertemitteln verbunden, welche die Bildsignale des Sensors 14 erhalten, ggf. in digitale Form umwandeln und daraus den vergrößerten sowie den tatsächlichen (unvergrößerten) Taillendurchmesser ermitteln. Zur Intensitätsabschwächung des Laserstrahls können in dessen Strahlengang ein oder mehrere Neutralwertfilter (Graufilter) angeordnet sein. Insbesondere kann bei der Beispielkonfiguration der Figur 1 zwischen der Linse 12 und dem Bildsensor 14 ein solcher Graufilter vorgesehen sein. Die optische Dicke des Graufilters führt dann zu einem geringfügigen Versatz des Brennpunkts 22, der bei der Positionierung des Bildsensors 14 zu berücksichtigen ist.

Man erkennt, dass die gekrümmten Seiten der Linsen 10, 12 jeweils dem Strahlabschnitt geringerer Divergenz zugewandt sind. Die durch die erste Linse 10 bewirkte Vergrößerung des Taillendurchmessers geht mit einer Parallelisierung des Strahls einher, weswegen der Laserstrahl auf der Bildseite der Linse 10 geringere Divergenz als auf der Objektseite hat. Für die Linse 12 gilt dagegen, dass der Laserstrahl auf ihrer Bildseite wieder stärkere Divergenz besitzt. Hieraus ergibt sich die in Figur 1 gezeigte Anordnung der Linsen mit einander zugewandten gekrümmten Seiten. Die Maßnahme, die planen Linsenseiten den Strahlabschnitten stärkerer Divergenz zuzuwenden und die gekrümmten Linsenseiten den Strahlabschnitten schwächerer Divergenz zuzuwenden, erlaubt es, die durch die Linsen 10, 12 bewirkten Wellenfrontdeformationen gering zu halten und damit die Abbildungsverzerrungen auf ein Minimum zu reduzieren.

Um ein Zahlenbeispiel zu geben, soll der Vergrößerungsmaßstab etwa 20 betragen (d.h. der Taillendurchmesser am Bildsensor 14 soll zwanzig Mal größer sein als der unvergrößerte Taillendurchmesser), so kann für die Linse 10 beispielsweise eine Brennweite von etwa 3mm und für die Linse 12 eine Brennweite von etwa 60mm gewählt werden. Mit diesen Brennweiten kann insgesamt eine vergleichsweise kurze Bauform des Messgeräts erzielt werden. Selbstverständlich sind die vorstehenden Zahlenangaben rein beispielhaft; insbesondere können andere Werte für den Vergrößerungsmaßstab angestrebt werden, die dementsprechend auch andere Brennweiten der Linsen 10, 12 erfordern können.

Bei der Variante der Figur 2 umfasst die Vergrößerungslinsenanordnung insgesamt vier - wiederum optisch dünne - Linsen, die nunmehr mit 24, 26, 28, 30 bezeichnet sind. Der Bildsensor ist weiterhin mit 14 bezeichnet und die optische Achse weiterhin mit 16. Die in Ausbreitungsrichtung des Strahls gesehen zweite Linse 26 sowie die vierte Linse 28 sind jeweils als plan-konvexe Sammellinse ausgeführt, während die erste Linse 24 und die dritte Linse 28 jeweils als plan-konkave Zerstreuungslinse ausgeführt sind. Das Linsenpaar 24, 26 bildet sozusagen eine erste Vergrößerungsstufe der Vergrößerungslinsenanordnung, während das zweite Linsenpaar 28, 30 eine zweite Vergrößerungsstufe bildet. Der Vergrößerungsfaktor beider Vergrößerungsstufen kann gleich oder verschieden sein; der Gesamtvergrößerungsmaßstab ergibt sich aus dem Produkt der Vergrößerungsfaktoren der beiden Vergrößerungsstufen.

Die beiden Sammellinsen 26, 30 haben im gezeigten Beispielfall jeweils gleiche Brennweite; die beiden Brennpunkte der Sammellinse 26 sind mit 32, 34 bezeichnet, die der Sammellinse 30 mit 36, 38. Wegen ihrer negativen Brennweite liegen die Zerstreuungslinsen 24, 28 jeweils hinter dem Brennpunkt der anschließenden Sammellinse, jedoch wiederum so, dass sie mit ihrem (virtuellen) Brennpunkt mit dem Brennpunkt der jeweils anschließenden Sammellinse zusammenfallen. Das heißt, der Brennpunkt 32 ist zugleich ein (virtueller) Brennpunkt der Linse 24 und die Brennpunkte 34, 36 entsprechen ebenfalls je einem (virtuellen) Brennpunkt der Zerstreuungslinse 28.

Die Verwendung von Zerstreuungslinsen anstelle von Sammellinsen erlaubt eine Verkürzung der Baugröße des Messgeräts, wobei sich dieser Effekt jedoch stärker bei der Vierlinsen-Konfiguration der Figur 2 als bei der Zweilinsen-Konfiguration der Figur 1 bemerkbar macht.

Um erneut ein Zahlenbeispiel zu geben: soll der Vergrößerungsmaßstab der Vergrößerungslinsenanordnung wiederum etwa 20 betragen, so können die Sammellinsen 26, 30 beispielsweise jeweils eine Brennweite von etwa 42 mm haben, während für die Zerstreuungslinsen eine Brennweite von jeweils etwa -9 mm gewählt werden kann. Auch dies sind selbstverständlich nur beispielhafte Angaben, die jederzeit anders gewählt werden können, insbesondere wenn ein anderer Vergrößerungsmaßstab der Vergrößerungslinsenanordnung angestrebt wird.

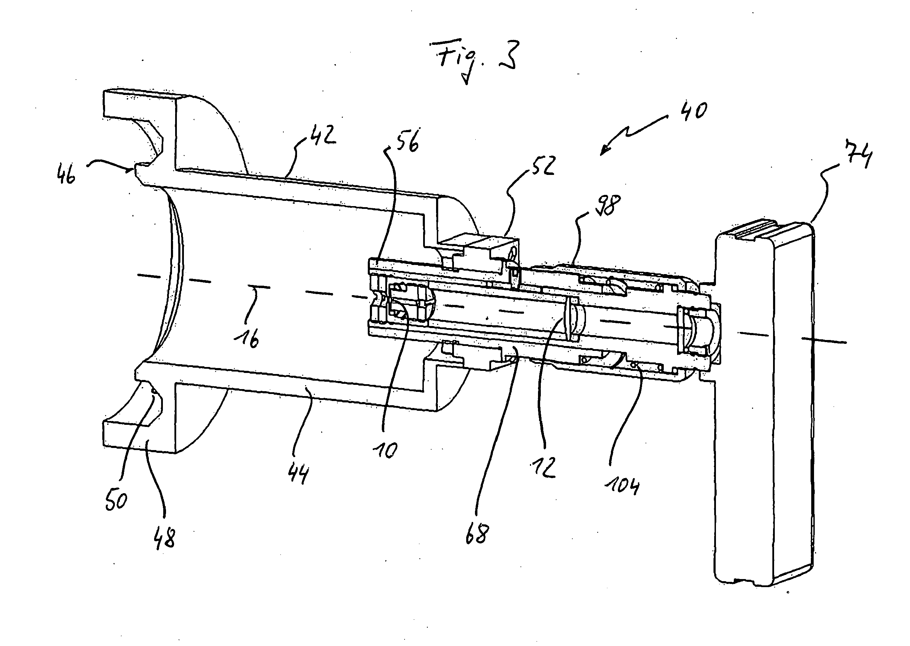

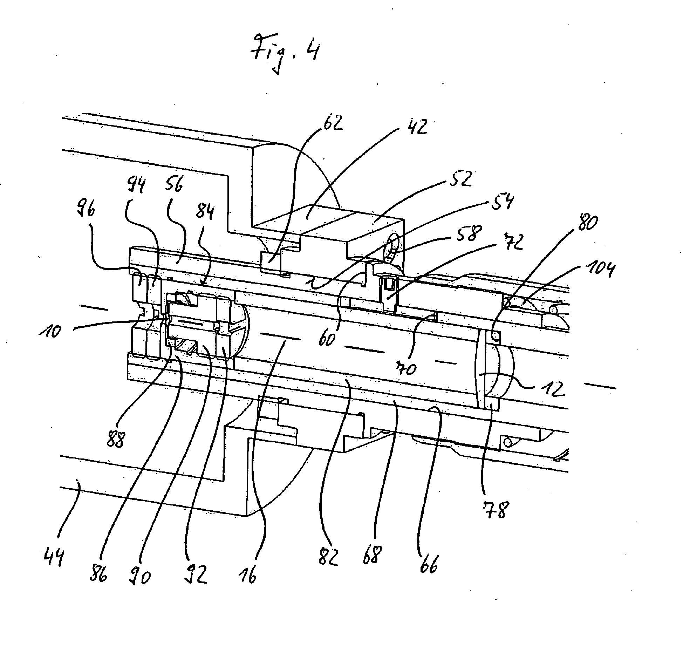

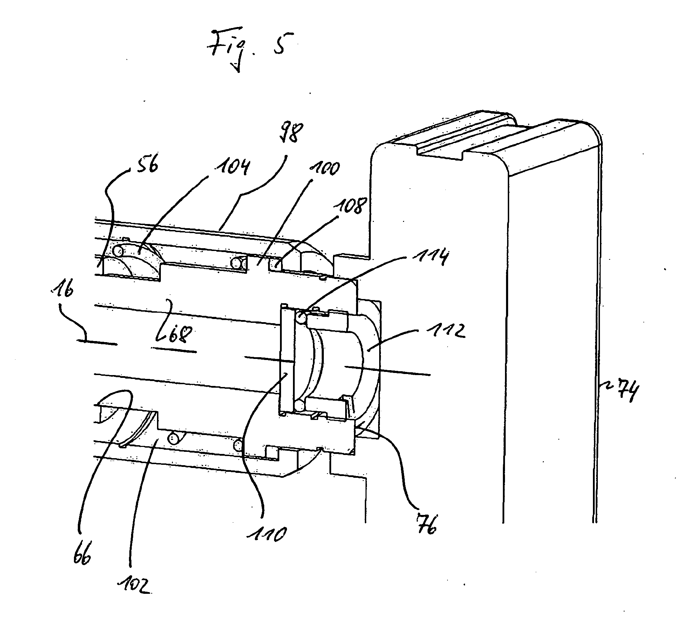

Zur Erläuterung eines konkreten Konstruktionsbeispiels wird nun auf die Figuren 3 bis 5 verwiesen. Das dort dargestellte Messgerät ist allgemein mit 40 bezeichnet. Es besitzt einen Adapter 42 mit einem die optische Achse 16 hülsenartig umschließenden Adapterhauptabschnitt 44. Im Bereich des in Figur 3 linken axialen Endes ist der Adapter 42 zur Kopplung mit einem den Laserstrahl bereitstellenden Lasersystem ausgebildet. Die hierzu vorgesehenen Kopplungsmittel umfassen eine axialgerichtete Ringanschlagfläche 46, welche der axialen Anlage und damit der axialen Positionierung des Messgeräts 40 relativ zu dem Lasersystem dient. Des weiteren umfassen die angesprochenen Kopplungsmittel einen mit dem Adapterhauptabschnitt 44 vorzugsweise einstückig ausgeführten, ringartig umlaufenden Klemmabschnitt 48 zur radialen Klemmung eines Objektivrands oder einer anderen Formation des Lasersystems. Der Klemmabschnitt 48 besitzt eine Mehrzahl in Umfangsrichtung verteilter Gewindebohrungen 50 zur Aufnahme radialer Klemmschrauben (nicht dargestellt).

Im Bereich seines anderen axialen Endes ist der Adapterhauptabschnitt 44 lösbar mit einem Justierblock 52 verbunden, welcher eine Aufnahmeöffnung 54 für einen Führungstubus 56 bildet. Der Justierblock 52 besitzt Gewindebohrungen 58 zur Aufnahme von nicht näher dargestellten Befestigungsschrauben, mittels welcher der Adapter 42 an dem Justierblock 52 befestigbar ist. Der Führungstubus 56 ist axial unbeweglich in der Aufnahmeöffnung 54 des Justierblocks 52 gehalten, ist jedoch mittels nicht näher dargestellter Justierschrauben des Justierblocks 52 relativ zu diesem in einer radialen Ebene justierbar. Hierzu kann der Justierblock 52 in nicht näher dargestellter Weise eine den Führungstubus 56 radial klemmende Innenhülse aufweisen, welche in einem Gehäuse des Justierblocks 52 querjustierbar gehalten ist. Geeignete Justierblöcke sind handelsüblich erhältlich. Beispielsweise kann hierzu auf eine unter der Produktbezeichnung XY-Justieraufnahmeplatte OH40 der Firma OWIS GmbH verwiesen werden, die gegebenenfalls mit geringfügigen Modifikationen für den Justierblock 52 verwendet werden kann. Der Justierblock 52 gestattet eine voneinander unabhängige Querjustierung des Führungstubus 56 in zwei zueinander senkrechten Radialrichtungen. Insgesamt kann somit der Führungstubus 56 in einer achsnormalen Ebene in beliebiger Richtung justiert werden.

Die axiale Festlegung des Führungstubus 56 gegenüber dem Justierblock 52 ist im gezeigten Ausführungsbeispiel durch eine Axialschulter 60 am Außenumfang des Führungstubus 56 sowie einen Schraubring 62 gewährleistet, welcher auf den Führungstubus 56 aufgeschraubt ist. Der Justierblock 52 ist axial zwischen der Axialschulter 60 und dem Schraubring 62 gehalten.

Der Führungstubus 56 bildet eine axiale Führungsaufnahmeöffnung 66 für einen Linsentubus 68, welcher zusammen mit den Linsen einer Vergrößerungslinsenanordnung zu einer Baueinheit vormontierbar ist und als solchermaßen vormontierte Baueinheit in den Führungstubus 56 einsetzbar ist. Die Vergrößerungslinsenanordnung entspricht im vorliegenden Beispielfall der Variante der Figur 1, weswegen bei dem Messgerät der Figuren 3 bis 5 die beiden einzig vorhandenen Linsen ebenfalls mit 10 und 12 bezeichnet sind. Es versteht sich jedoch, dass auch eine andere Linsenkonfiguration, etwa diejenige der Figur 2, gleichermaßen in den Linsentubus 68 einbaubar ist.

Der Linsentubus 68 ist in der Führungsaufnahmeöffnung 66 des Führungstubus 56 axial beweglich, jedoch unverdrehbar geführt. Zur Verdrehsicherung der beiden Tuben gegeneinander weist der Linsentubus 68 eine in seine Außenumfangsfläche eingearbeitete, axial längliche Ausnehmung 70 auf, in welche eine nicht näher dargestellte Verdrehsicherungsschraube eingreift, welche in ein entsprechendes Gewindeloch 72 des Führungstubus 56 einschraubbar ist.

Man erkennt, dass der Linsentubus 68 und der Führungstubus 56 gemeinsam in den hülsenförmigen Hauptabschnitt 44 des Adapters 42 hineinreichen, insbesondere im wesentlichen gleich weit, und dass der Linsentubus 68 im Bereich seines axial anderen Endes aus dem Führungstubus 56 herausragt. Im Bereich seines herausragenden Endes ist der Linsentubus 68 mit einer digitalen Bildkamera 74 gekoppelt, in welcher ein in den Figuren 3 bis 5 nicht näher dargestellter Bildsensor eingebaut ist, etwa der Bildsensor 14 der Figuren 1 und 2. Eine axiale Anschlagfläche 76 am freien axialen Ende des Linsentubus 68 erlaubt eine definierte axiale Positionierung der Bildkamera 74 relativ zu dem Linsentubus 68 und folglich gegenüber den darin eingebauten Linsen 10, 12. Die Kopplung der Bildkamera 74 mit dem Linsentubus 68 kann beispielsweise eine Gewindekopplung oder eine Radialklemmkopplung sein. Die Ausgestaltung des Messgeräts 40 mit einer lösbar an den Linsentubus 68 ankoppelbaren Bildkamera 74 ermöglicht den Rückgriff auf marktgängige Kameramodelle.

Es wurde bereits gesagt, dass der Linsentubus 68 zusammen mit den in ihn eingesetzten Komponenten zu einer Baueinheit vormontierbar ist. Diese Komponenten umfassen neben den beiden Linsen 10, 12 einen Vorsatzring 78, welcher bei der Vormontage als erste Komponente in den Linsentubus 68 eingeschoben wird und eine plane Auflagefläche für die plane Seite der Linse 12 bereitstellt. Der Vorsatzring 78 liegt an einer Axialschulter 80 an, die am Übergang zwischen einem durchmessergrößeren Abschnitt der inneren Tubusöffnung und einem durchmesserkleineren Abschnitt gebildet ist. Im Anschluss an die Linse 12 ist ein Abstandsrohr 82 in den Linsentubus 68 eingeschoben. Auf das Abstandsrohr 82 folgt eine wiederum für sich als Baueinheit vormontierte Linsenbaugruppe 84 mit der Linse 10. Die Linsenbaugruppe 84 umfasst eine näherungsweise topfförmige Linsenfassung 86, welche an ihrem Boden ein mittiges Durchtrittsloch für den Laserstrahl aufweist. Die Linse 10 liegt über diesem Loch und stützt sich mit ihrer planen Linsenseite am Topfboden der Linsenfassung 86 ab. Eine Zentrierscheibe 88 sorgt für eine radiale Zentrierung der Linse 10 in der Linsenfassung 86. Die Linsenfassung 86 besitzt an der Innenseite ihres Topfmantels ein Gewinde, in das eine Linsenklemmschraube 90 sowie eine dahinterliegende Gewindescheibe 92 eingeschraubt sind. Um die Linse 10 nicht zu verletzen, ist die Linsenklemmschraube 90 nicht gegen die Linse 10 angezogen, sondern mit der Gewindescheibe 92 gekontert.

Die so im voraus montierte Linsenbaugruppe 84 wird in den Linsentubus 68 eingeschoben, bis die Linsenfassung 86 gegen das Abstandsrohr 82 stößt. Der Linsentubus 68 ist im Bereich seines adapterseitigen Endes mit einem Innengewinde ausgeführt, in das zwei weitere Gewindescheiben 94, 96 einschraubbar sind, die zur Fixierung der übrigen Komponenten im Linsentubus 68 dienen. Wiederum sind die beiden Gewindescheiben 94, 96 vorzugsweise gegeneinander gekontert, damit nicht über die Linsenfassung 86 und das Abstandsrohr 82 axiale Spannkräfte auf die Linse 12 übertragen werden.

Weiter oben wurde bereits erläutert, dass der Linsentubus 68 axial relativ zu dem Führungstubus 56 beweglich in der Führungsaufnahmeöffnung 66 geführt ist. Zwischen dem Linsentubus 68 und dem Führungstubus 56 sind Längsverstellmittel wirksam, welche eine definierte Längsverstellung (Längsjustage) des Linsentubus 68 gegenüber dem Führungstubus 56 ermöglichen. Diese Längsverstellmittel umfassen ein in Gewindeeingriff mit dem Führungstubus 56 stehendes Stellglied 98, welches zugleich in axialem Abstützeingriff mit dem Linsentubus 68 steht. Im gezeigten Beispielfall ist das Stellglied als Gewindehülse ausgebildet, welche auf dem Führungstubus 56 sitzt und einen im Bereich des kameranahen Endes gebildeten Stützbund 100 des Linsentubus 68 radial hintergreift. Die Gewindehülse 98 ist mit einem Innengewinde ausgeführt, mit welchem sie auf ein komplementäres Außengewinde des Führungstubus 56 aufgeschraubt ist. Zwischen der Gewindehülse 98 und dem Linsentubus 68 ist ein Ringraum 102 gebildet, in welchem eine als Schraubendruckfeder ausgebildete Vorspannfeder 104 untergebracht ist. Die Vorspannfeder 104 stützt sich axial einenends an dem Stützbund 100 des Linsentubus 68 und axial andernends an dem Führungstubus 56 ab und übt eine die beiden Tuben 56, 68 auseinanderdrückende Vorspannkraft aus. Diese axiale Vorspannkraft wird vom Linsentubus 68 über dessen Stützbund 100 auf einen am kameranahen Ende der Gewindehülse 98 ausgebildeten, nach radial innen ragenden Ringsteg 106 abgeleitet. Zur Verminderung der Reibung zwischen dem Führungstubus 68 und der Gewindehülse 98 ist ein Gleitring 108 aus einem gleitgünstigen Material auf den Linsentubus 68 zwischen dem Stützbund 100 und dem Ringsteg 106 aufgesetzt. Die Vorspannfeder 104 ist ausreichend stark, um bei normaler Handhabung des Messgeräts 40 jegliche unbeabsichtigte Spielbewegung zwischen dem Linsentubus 68 und dem Führungstubus 56 zu unterbinden.

Die Gewindehülse 98 ermöglicht eine definierte Längsverstellung des Systems aus den Linsen 10, 12 und der Kamera 74 relativ zu dem Führungstubus 56 und somit relativ zu der als Referenzpunkt dienenden Anschlagfläche 46 des Adapters 42. Wegen des vergleichsweise großen Gewindedurchmessers (groß im Vergleich beispielsweise zu einer Mikrometerschraube) ist eine sehr feinfühlige Längsverstellung des Linsentubus 68 möglich. Insbesondere ist auf diese Weise eine Einstellgenauigkeit in Axialrichtung von nur wenigen Mikrometern erreichbar. Nimmt man beispielsweise einen Durchmesser der Gewindehülse 98 von etwa 34 mm an, so kann mit einer Gewindesteigung von etwa 0,5 mm eine derartig hohe und präzise Einstellgenauigkeit erzielt werden (unter der zusätzlichen Annahme, dass mit der menschlichen Hand eine minimale Verdrehung der Gewindehülse 98 um 0,5 bis 1 mm möglich ist). Der maximale Verstellweg des Linsentubus 68 in Axialrichtung kann beispielsweise im Bereich einiger weniger Millimeter liegen, was ausreicht, um bei üblichen Strahldurchmessern M²-Messungen durchzuführen, zu denen eine Längsverstellbarkeit des Linsentubus 68 um die dreifache Rayleigh-Länge erforderlich ist.

Zur Intensitätsabschwächung des Laserstrahls ist in den Linsentubus 68 noch ein Graufilter 110 eingebaut, das vom kameranahen Ende des Linsentubus 68 her in diesen eingeschoben ist und darin mittels einer Klemmhülse 112 unter Zwischenfügung eines Elastomerrings 114 gesichert ist. Der Graufilter 110 ist auf diese Weise auswechselbar, so dass für unterschiedliche Strahlintensitäten unterschiedlich dichte Graufilter verwendet werden können.

## Patentansprüche

1. Verwendung eines Messgeräts zur Vermessung eines fokussierten Laserstrahls, wobei das Messgerät umfasst:
- eine Vergrößerungslinsenanordnung mit mindestens zwei im Strahlengang des Laserstrahls hintereinander angeordneten Linsen (10, 12), wobei paarweise aufeinanderfolgende Linsen der Vergrößerungslinsenanordnung jeweils zusammenfallende Brennpunkte haben,
- einen hinter der Vergrößerungslinsenanordnung in deren Brennpunkt angeordneten elektronischen Bildsensor (14) zur Aufnahme eines Bilds des vergrößerten Laserstrahls,
- Längsverstellmittel (98), welche eine gemeinsame Verstellung der Linsen (10, 12) der Vergrößerungslinsenanordnung und des Bildsensors (14) entlang des Strahlengangs relativ zu einem Referenzpunkt (46) des Messgeräts gestatten,
- wobei zumindest ein Teil der Linsen, insbesondere alle Linsen (10, 12), der Vergrößerungslinsenanordnung im Strahlengang hintereinander in einen Linsentubus (68) eingebaut sind, welcher mittels der Längsverstellmittel (98) in Richtung seiner Tubusachse relativ zu dem Referenzpunkt (46) verstellbar ist,
- wobei der Linsentubus (68) axial verlagerbar, jedoch vorzugsweise verdrehgesichert, in einer Führungsaufnahmeöffnung (66) eines Führungskörpers (56) geführt ist, und die Längsverstellmittel (98) zwischen dem Linsentubus (68) und dem Führungskörper (56) wirksam sind,
- wobei der Führungskörper (56) einen den Strahlengang umschließenden Adapter (42) zur Ankopplung des Messgeräts an ein den Laserstrahl bereitstellendes Lasersystem trägt und
- wobei der Adapter (42) eine bezogen auf eine Strahlachse (16) des Laserstrahls axial gerichtete Anschlagfläche (46) für das Lasersystem bildet,
wobei im Rahmen der Verwendung des Messgeräts der Adapter an ein Objektiv eines den Laserstrahl bereitstellenden Lasersystems angekoppelt wird.

2. Verwendung nach Anspruch 1,
**dadurch gekennzeichnet, dass** die Vergrößerungslinsenanordnung insgesamt zwei Linsen (10, 12) aufweist.

3. Verwendung nach Anspruch 1,
**dadurch gekennzeichnet, dass** die Vergrößerungslinsenanordnung insgesamt vier Linsen (24, 26, 28, 30) aufweist.

4. Verwendung nach einem der Ansprüche 1 bis 3,
**dadurch gekennzeichnet, dass** alle Linsen (10, 12) der Vergrößerungslinsenanordnung jeweils als Sammellinse ausgebildet sind.

5. Verwendung nach einem der Ansprüche 1 bis 3,
**dadurch gekennzeichnet, dass** die Vergrößerungslinsenanordnung wenigstens eine Zerstreuungslinse (24, 28) aufweist, jedoch zumindest die letzte Linse (30) als Sammellinse ausgebildet ist.

6. Verwendung nach einem der vorhergehenden Ansprüche,
**dadurch gekennzeichnet, dass** mindestens eine Linse (10, 12) der Vergrößerungslinsenanordnung eine plane Linsenseite besitzt und mit ihrer gekrümmten Linsenseite dem Strahlabschnitt geringerer Divergenz zugewandt ist.

7. Verwendung nach einem der vorhergehenden Ansprüche,
ferner **gekennzeichnet durch** Querverstellmittel (52), welche eine Verstellung zumindest der ersten Linse (10) der Vergrößerungslinsenanordnung quer, insbesondere senkrecht zum Strahlengang relativ zu dem Referenzpunkt (46) gestatten.

8. Verwendung nach einem der vorhergehenden Ansprüche,
**dadurch gekennzeichnet, dass** die Längsverstellmittel (98) eine Verstellung der Vergrößerungslinsenanordnung und des Bildsensors um mindestens die dreifache Rayleigh-Länge des Laserstrahls gestatten.

9. Verwendung nach Anspruch 7 oder 8,
**dadurch gekennzeichnet, dass** die Querverstellmittel (52) eine voneinander unabhängige Verstellung zumindest der ersten Linse (10) der Vergrößerungslinsenanordnung in zwei zueinander senkrechten Querrichtungen gestatten.

10. Verwendung nach einem der vorhergehenden Ansprüche,
**dadurch gekennzeichnet, dass** der Führungskörper (56) tubusförmig ausgebildet ist.

11. Verwendung nach einem der vorhergehenden Ansprüche,
**dadurch gekennzeichnet, dass** der Linsentubus (68) axial einenends aus dem Führungskörper (56) herausragt und im Bereich seines herausragenden Endes zur mechanischen Kopplung mit einer den Bildsensor enthaltenden Kamera (74) ausgebildet ist.

12. Verwendung nach einem der vorhergehenden Ansprüche,
**dadurch gekennzeichnet, dass** zwischen dem Linsentubus (68) und dem Führungskörper (56) elastische Vorspannmittel (104) wirksam sind, welche den Linsentubus axial gegenüber dem Führungskörper vorspannen.

13. Verwendung nach einem der vorhergehenden Ansprüche,
**dadurch gekennzeichnet, dass** der Adapter (42) ein von dem Führungskörper (56) gesondertes Bauteil ist und vorzugsweise auswechselbar mit dem Führungskörper verbunden ist.

14. Verwendung nach Anspruch 13 soweit abhängig von Anspruch 7,
**dadurch gekennzeichnet, dass** die Querverstellmittel (52) zwischen dem Adapter (42) und dem Führungskörper (56) wirksam sind.

## Claims

1. Use of a measuring device for measuring a focussed laser beam, the measuring device comprising:
- a magnification lens system including at least two lenses (10, 12) disposed one after another along a beam path of the laser beam, wherein each pair of successive lenses of the magnification lens system has coinciding focal points;
- an electronic image sensor (14) disposed behind the magnification lens system at a focal point thereof, for capturing a magnified image of the laser beam;
- longitudinal adjustment means (98) permitting simultaneous adjustment of the lenses (10, 12) of the magnification lens system and the image sensor (14) along the beam path with respect to a reference point (46) of the measuring device;
- wherein at least part of the lenses, in particular all lenses (10, 12), of the magnification lens system are mounted in a lens barrel (68) one after another in the direction of the beam path, the lens barrel being adjustable in the direction of a barrel axis thereof with respect to the reference point (46) by means of the longitudinal adjustment means (98);
- wherein the lens barrel (68) is guided in a guide receiving opening (66) of a guide body (56) for axial movement therein and is preferably secured against rotation therein, and wherein the longitudinal adjustment means (98) are effective between the lens barrel (68) and the guide body (56);
- wherein the guide body (56) supports an adapter (42), which encloses the beam path, for coupling the measuring device to a laser apparatus providing the laser beam; and
- wherein the adapter (42) provides an abutment surface (46), which is axially directed with respect to a beam axis (16) of the laser beam, for the laser apparatus; wherein in the use of the measuring device the adapter is coupled to an objective of a laser apparatus providing the laser beam.

2. Use of claim 1, **characterized in that** the magnification lens system includes two lenses (10, 12) altogether.

3. Use of claim 1**, characterized in that** the magnification lens system includes four lenses (24, 26, 28, 30) altogether.

4. Use of any one of claims 1 to 3, **characterized in that** all lenses (10, 12) of the magnification lens system are configured as a converging lens each.

5. Use of any one of claims 1 to 3, **characterized in that** the magnification lens system includes at least one diverging lens (24, 28) and that at least a last lens (30) is configured as a converging lens

6. Use of any one preceding claim, **characterized in that** at least one lens (10, 12) of the magnification lens system has one planar lens face and has its curved lens face directed toward a beam portion having smaller divergence.

7. Use of any one preceding claim, further **characterized by** transverse adjustment means (52) permitting adjustment of at least a first lens (10) of the magnification lens system with respect to the reference point (46) in a transverse direction, in particular a perpendicular direction, to the beam path.

8. Use of any one preceding claim, **characterized in that** the longitudinal adjustment means (98) permit adjustment of the magnification lens system and the image sensor by at least three times of the Rayleigh length of the laser beam.

9. Use of claim 7 or 8, **characterized in that** the transverse adjustment means (52) permit independent adjustment of at least the first lens (10) of the magnification lens system in two mutually orthogonal transverse directions.

10. Use of any one preceding claim, **characterized in that** the guide body (56) is tube-shaped.

11. Use of any one preceding claim, **characterized in that** the lens barrel (68) protrudes at one of its axial ends from the guide body (56) and is adapted in the region of its protruding end for mechanical coupling to a camera (74) accommodating the image sensor.

12. Use of any one preceding claim, **characterized in that** elastic bias means (104) are effective between the lens barrel (68) and the guide body (56) for biasing the lens barrel axially with respect to the guide body.

13. Use of any one preceding claim, **characterized in that** the adapter (42) is a separate component from the guide body (56) and is preferably replaceably connected to the guide body.

14. Use of claim 13 when dependent from claim 7, **characterized in that** the transverse adjustment means (52) are affective between the adapter (42) and the guide body (56).

## Revendications

1. Utilisation d'un appareil de mesure d'un rayon laser focalisé, lequel appareil de mesure comprend :
- un ensemble de lentilles grossissantes qui présente au moins deux lentilles (10, 12) disposées l'une derrière l'autre dans la trajectoire du rayon laser, les lentilles dudit ensemble de lentilles grossissantes qui se succèdent par paires ayant des points focaux qui coïncident,
- un détecteur électronique d'image (14) disposé en aval et au point focal de l'ensemble de lentilles grossissantes, et destiné à l'enregistrement d'une image du rayon laser grossi,
- des moyens de réglage longitudinal (98) qui permettent un réglage conjoint des lentilles (10, 12) de l'ensemble de lentilles grossissantes et du détecteur d'image (14) le long de la trajectoire du rayon par rapport à un point de référence (46) de l'appareil de mesure,
- au moins une partie des lentilles, plus particulièrement toutes les lentilles (10, 12), de l'ensemble de lentilles grossissantes étant montées les unes derrière les autres dans la trajectoire du rayon laser à l'intérieur d'un tube (68), lequel tube de lentilles peut, à l'aide des moyens de réglage longitudinal (98), être ajusté dans le sens de son axe par rapport au point de référence (46),
- le tube de lentilles (68) qui peut être déplacé axialement, mais est cependant préférentiellement bloqué en rotation, étant guidé dans une ouverture de logement de guidage (66) d'un corps de guidage (56), et les moyens de réglage longitudinal (98) étant opérationnels entre le tube de lentilles (68) et le corps de guidage (56),
- le corps de guidage (56) supportant un adaptateur (42) qui enveloppe la trajectoire du rayon laser pour coupler l'appareil de mesure à un système laser qui délivre le rayon laser et
- l'adaptateur (42) formant pour le système laser une surface de butée (46) orientée axialement par rapport à l'axe (16) du rayon laser,
l'adaptateur étant, dans le cadre de l'utilisation de l'appareil de mesure, couplé à un objectif d'un système laser qui délivre le rayon laser.

2. Utilisation selon la revendication 1,
**caractérisée en ce que** l'ensemble de lentilles grossissantes présente en tout deux lentilles (10, 12).

3. Utilisation selon la revendication 1,
**caractérisée en ce que** l'ensemble de lentilles grossissantes présente en tout quatre lentilles (24, 26, 28, 30).

4. Utilisation selon l'une des revendications 1 à 3,
**caractérisée en ce que** toutes les lentilles (10, 12) de l'ensemble de lentilles grossissantes sont chacune conçues comme une lentille convergente.

5. Utilisation selon l'une des revendications 1 à 3,
**caractérisée en ce que** l'ensemble de lentilles grossissantes présente au moins une lentille divergente (24, 28), au moins la dernière lentille (30) étant cependant conçue comme une lentille convergente.

6. Utilisation selon l'une des revendications précédentes,
**caractérisée en ce qu'**au moins une lentille (10, 12) de l'ensemble de lentilles grossissantes possède une face plane et est tournée avec sa face cintrée vers la portion du rayon de plus faible divergence.

7. Utilisation selon l'une des revendications précédentes,
**caractérisée en outre par** des moyens de réglage transversal (52) qui permettent d'ajuster au moins la première lentille (10) de l'ensemble de lentilles grossissantes transversalement, plus particulièrement perpendiculairement à la trajectoire du rayon par rapport au point de référence (46).

8. Utilisation selon l'une des revendications précédentes,
**caractérisée en ce que** les moyens de réglage longitudinal (98) permettent d'ajuster l'ensemble de lentilles grossissantes et le détecteur d'image à une longueur au moins égale au triple de la longueur de Rayleigh du rayon laser.

9. Utilisation selon la revendication 7 ou 8,
**caractérisée en ce que** les moyens de réglage transversal (52) permettent d'ajuster indépendant au moins la première lentille (10) de l'ensemble de lentilles grossissantes dans deux directions transversales perpendiculaires l'une par rapport à l'autre.

10. Utilisation selon l'une des revendications précédentes,
**caractérisée en ce que** le corps de guidage (56) est conçu sous la forme d'un tube.

11. Utilisation selon l'une des revendications précédentes,
**caractérisée en ce que** le tube de lentilles (68) fait, par une de ses extrémités, axialement saillie du corps de guidage (56) et est, dans la partie de son extrémité saillante, conçu pour être mécaniquement couplé à une caméra (74) contenant le détecteur d'image.

12. Utilisation selon l'une des revendications précédentes,
**caractérisée en ce que** des moyens de précontrainte élastiques (104), qui précontraignent le tube de lentilles axialement par rapport au corps de guidage, sont opérationnels entre le tube de lentilles (68) et le corps de guidage (56).

13. Utilisation selon l'une des revendications précédentes,
**caractérisée en ce que** l'adaptateur (42) est une pièce distincte du corps de guidage (56) et est relié préférentiellement de manière interchangeable au corps de guidage.

14. Utilisation selon la revendication 13, dans la mesure où elle dépend de la revendication 7,
**caractérisée en ce que** les moyens de réglage transversal (52) sont opérationnels entre l'adaptateur (42) et le corps de guidage (56).
